# EUROPEAN PATENT APPLICATION

(11) **EP 2 287 796 A1**
(43) Date of publication of application: **23.02.2011**
(21) Application number: 10173299.8
(22) Date of filing: 18.08.2010
(51) Int. Cl.: G06Q 30/00

(54) **Distribution of E-coupons to user devices**

(30) Priority: 20.08.2009 US 544627
(71) Applicant: Comcast Cable Communications, LLC, Philadelphia, PA 19103 (US)
(72) Inventor: Cook, Michael J., Philadelphia PA 19103 (US)
(74) Representative: Watterson, Peer Marten John

(57) **Abstract**

A method and system for determining which of a plurality of users may be sent an e-coupon. More particularly, a computing device may determine which of a plurality of users are watching a particular program or advertisement on television and may determine a corresponding e-coupon to be sent to the users watching the particular program.

## Description

### FIELD OF INVENTION

The disclosure is related to the field of advertising products and services based upon broadcast programming viewed by a user by way of coupons or advertisements.

### BACKGROUND

Broadcast programming generally includes intermittent advertisements of different products or services during or between programs. For example, a football game broadcasted on national television may include a few 30 second advertising spots during a timeout or between quarters. The broadcasting entity may sell air time to businesses interested in advertising their products to generate revenue, while businesses use the limited time to attract consumers to purchase their products or services.

However, the interaction between the business (and their products) with the user is limited to the short time span that the product advertisement is aired. In order for the business to realize the goal of motivating the user to purchase the business's products or services advertised, the business relies on the strength of the advertisement and is subject to the whim of the user while the commercial is airing. Indeed, most users who are watching television do so to enjoy the broadcast program and might not recall the interesting products or services advertised afterwards.

Moreover, advertising slots are limited. That is, compared to the duration of the broadcast program, the interspersed advertisements or commercials may only be a small percentage what the user views. As such, it may be difficult for the user to remember which products were advertised. And even if the user is able to remember products or services of interest immediately after the program, the user might not recall the products or services several days later when the user is ready to purchase the product or service.

In order to supplement commercials on television, some businesses may send out coupons. Coupons may be used as a second form of advertisement and may. For example, some businesses distribute coupons via the newspaper, mail or internet as an advertising tool attracting users who may be interested in saving money or as a way to promote new products.

### BRIEF SUMMARY

In one example, a method and apparatus is provided to generate and distribute e-coupons to a user's digital telephone, computer or other digital communication device contemporaneously with the user viewing a transmitted program or advertisement. For example, the e-coupon may be for a product or service related to, or that otherwise depends upon, the subject matter of the televised program that the user is viewing. In one instance, a user who is viewing an advertisement for a new product may be much more likely to purchase the product if reminded of the product via a second method of advertisement or if given a financial incentive to purchase and try out the new product (e.g., a discount coupon). Alternatively, the user may be more inclined to purchase a new product if the user has more information regarding the product delivered to the user's computer or cordless phone (e.g., cellular phone).

In one aspect of the concepts discussed herein, the user may register (e.g., opt-in) to an e-coupon delivery service and may begin receiving e-coupons related to products or services that the user views. The user may configure and determine which types of e-coupons that the user is interested in receiving. Thereafter, responsive to the user viewing a particular program, a trigger may be sent from an ad server to an application server prompting an e-coupon to be sent to the user during the program or shortly thereafter. The e-coupon may be correlated in subject matter to the particular program that the user is watching. The e-coupon or advertisement may be delivered via one of a plurality of methods including but not limited to email, text messaging, graphics delivery to a cordless telephone, and the like. After receiving the e-coupon, the user may be able to print out the e-coupon and redeem it at a store or other appropriate location. Alternatively, the user may be able to redeem the e-coupon online without necessarily needing to print the e-coupon.

In another aspect, a presence server may be utilized to monitor the state of a user's set-top box or a user's television to determine what channel and/or program is currently being viewed by the user. The presence server may transmit state information to an application server. Responsive to the state information meeting one or more criteria, the application server may determine that an e-coupon is to be delivered to the user. Alternatively, the presence server may determine which users meet the criteria and may return such information as a list of users. The application server may then determine which of the users are eligible to receive an e-coupon and their preferred method of delivery. In one example, the application server may request an e-coupon from an ad server. After receiving the e-coupon from the ad server, the application server may configure the e-coupon to be in a particular format for delivery to the user's communication device according to the user's predefined preference.

### BRIEF DESCRIPTION OF THE DRAWINGS

FIG. 1 is a block diagram of an illustrative server that may be used according to one or more aspects of the invention.
FIG. 2 is a functional block diagram of an illustrative system for implementing the methods described herein according to one or more aspects of the invention.
FIG. 3 is a flow chart of an illustrative method of generating and sending an e-coupon according to one or more aspects of the invention.
FIG. 4 is a flow chart of an illustrative method of determining a list of users to receive an e-coupon according to one or more aspects of the invention.
FIG. 5 is a functional block diagram of an example of a server which indicates the current state information for monitored devices according to one or more aspects of the invention.
FIG. 6A is an example screenshot of a broadcast program viewed by a user according to one or more aspects of the invention.
FIG. 6B is an example screenshot of a displayed e-coupon based on a broadcast program viewed by a user according to one or more aspects of the invention.

### DETAILED DESCRIPTION

In the following description of various illustrative embodiments, reference is made to the accompanying drawings, which form a part hereof, and in which is shown, by way of illustration, various embodiments in which the claimed subject matter may be practiced. It is to be understood that other embodiments may be utilized and structural and functional modifications may be made without departing from the scope of the present claimed subject matter.

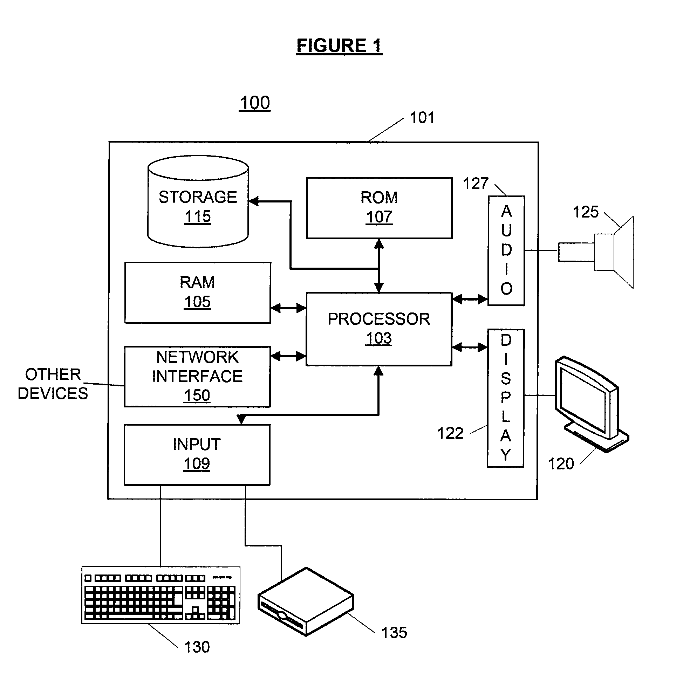

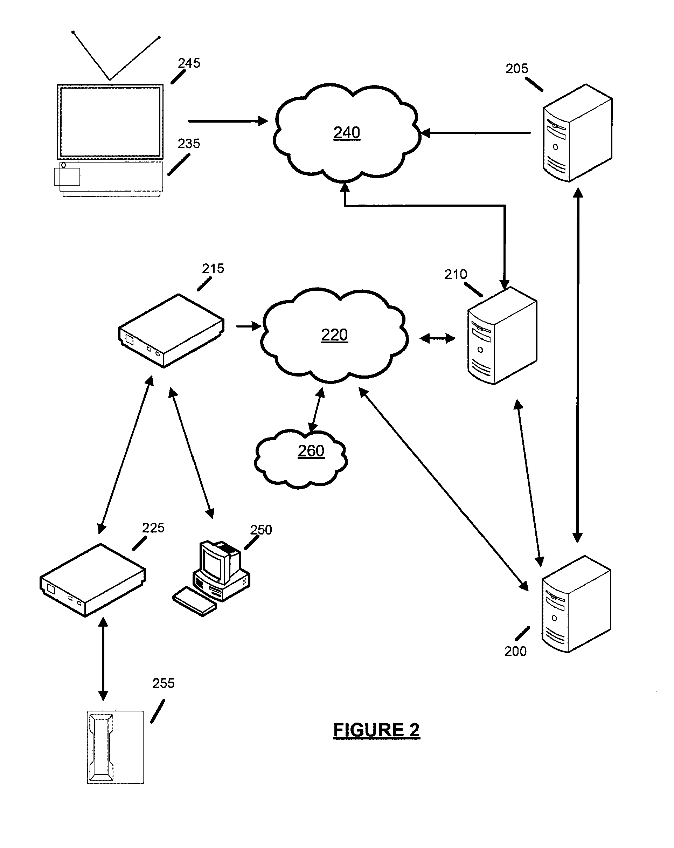

FIG. 1 is a block diagram of an illustrative computing environment 100 including a computing device 101 (e.g., a computer server). For example, in one example, the application server 200 (as illustrated in FIG. 2) may be a computing device 101. The computer 101 may have a processor 103 for controlling overall operation of the server and its associated components, including random-access memory (RAM) 105, read-only memory (ROM) 107, input module 109, output modules 122 and 127, and storage 115.

Input modules 109 may include, for example, a microphone, keypad, touch screen, and/or stylus through which a user of device 101 may provide input. Output modules 122 and 127 may include one or more of a speaker (e.g., speaker 125) for providing audio output and a video display device (e.g., display 120) for providing textual, audiovisual and/or graphical output. Software may be stored as computer-executable instructions within storage 115 and/or other storage to provide instructions to processor 103 for enabling computer 101 to perform various functions. For example, storage 115 may store software used by the server 101, such as an operating system, application programs, and an associated database. Alternatively or additionally, some or all of server 101 computer executable instructions may be embodied in hardware or firmware.

The computer 101 may operate in a networked environment supporting connections to one or more remote computers via network interface 150 with other devices such as an advertisement server (ad server) configured to provide advertisements to a user watching a transmitted video program and a presence server configured to determine the state of each user device. The ad server and the presence server may be personal computers or servers that include many or all of the elements described above with regard to server 101.

Computing device 101, ad server and presence server may each be mobile terminals including various other components, such as a battery and antennas (not shown).

The aspects described herein are operational with numerous other general purpose or special purpose computing system environments or configurations. Examples of well known computing systems, environments, and/or configurations that may be suitable for use with the one or more aspects described herein include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The aspects described herein may be described in the general context of computer-executable instructions, such as program modules, stored on a computer-readable medium and being executed by a computer. Generally, program modules may include routines, programs, objects, components, data structures, etc. that perform particular tasks or implement particular abstract data types. The methods and systems described may also be practiced in distributed computing environments where tasks are performed by remote processing devices that are linked through a communications network. In a distributed computing environment, program modules may be located in both local and remote computer storage media including memory storage devices.

FIG. 2 illustrates an example of a system for creating and delivering an e-coupon or advertisement to a user device including application server 200. Application server 200 may be a general computing device (such as computing device 101) including a processor and a memory storing instructions that, when executed by the processor, performs the functions of the application server 200 as described herein. The application server 200 may communicate with an ad server 205 and a presence server 210 via a network such as a local area network (LAN), a wide area network (WAN) or other network.

The ad server 205 and the presence server 210 may also be general computing devices (such as computing device 101), each including a processor and memory storing instructions that when executed performs the functions of the ad server 205 and the presence server 210, respectively, as described herein. For example, the presence server 210 may monitor the state of user devices such as set top box 235 and user computer 250 via cable network 240 and wireless network 220, respectively. The ad server 205 may, in one aspect, provide advertisements to be displayed on television 245 through cable network 240. In addition, the ad server 205 may provide the e-coupons to application server 200. Alternatively, the ad server 205 may trigger the application server 200 to generate the e-coupons for delivery to users.

The application server 200 may deliver an e-coupon to a user's communication device such as a personal computer 250, cordless telephone, or personal digital assistant (PDA) through network 220, such as via modem 215. Network 220 may be a wireless network such as a cellular telephone network or include a wireless component and may be connected to a public switched telephone network (PSTN) 260 in addition to the modem 215 and application server 200, among other devices.

The modem 215 may be located at a subscriber's house, apartment, business and the like. The cable modem 215 may communicate with base station 225 and the cordless telephone 255 as described in U.S. Application Serial No. 12/204,897 titled "DIGITAL ENHANCED CORDLESS TELECOMMUNITION (DECT) METHOD AND SYSTEM FOR DIGITAL TELEPHONY SELF INSTALL," filed September 5, 2008, the entire contents of which is hereby fully incorporated by reference. In addition, the modem 215 may communicate with a user's personal computer 250 via a LAN or other network.

It will be appreciated that the network connections shown are illustrative and other means of establishing a communications link between the devices may be used. The existence of any of various well-known protocols such as TCP/IP, Ethernet, FTP, HTTP and the like is presumed.

As understood by those skilled in the art, the steps that follow in the figures may be implemented by one or more of the components in FIGS. 1 and 2 and/or other components, including other computing devices.

The technology, such as the devices and networks described in FIGS. 1 and 2, may be utilized to generate e-coupons and to determine which e-coupon to deliver to a user watching a video program.

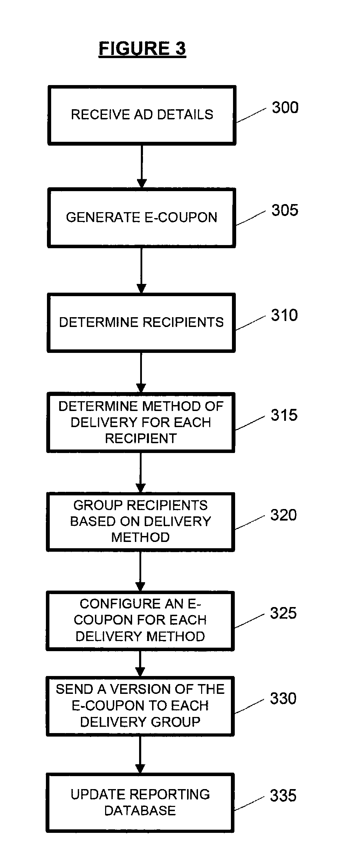

FIG. 3 illustrates an example of a method for delivering an e-coupon to a user. In one aspect, the delivery of an e-coupon to a user may be triggered by ad server 205. At step 300, application server 200 may receive advertisement related details from ad server 205 including, for example, notifications related to a user viewing status (e.g., video programming including broadcast programming or an advertisement that may be currently airing or a particular channel that the user television or set-top box is tuned to). The advertisement related details may include channel information that the advertisement is airing on, the product or service being advertised, the company producing the product or providing the service and the like.

The application server 200 may be triggered to generate and delivery e-coupons in any of a number of ways. As discussed above, the application server 200 may detect a trigger event such as being notified by ad server 205 of the advertisements or programs currently airing. In another example, a trigger event may be the application server 200 detecting a match in subject matter after cross-referencing a schedule and e-coupons related to the schedule (e.g., matching a key word or phrase as related to a particular schedule entry or file with a key word or phrase related to the e-coupon). For instance, the application server 200 may send out e-coupons related to a pizza product at 6:00 PM to all users who are watching a food channel, a food advertisement and the like. In another example, the application server 200 may be triggered by information stored in a set-top box. For example, the trigger may be a scheduled recording of a food channel program. Here, regardless of whether the user is actually watching the program, a coupon may be sent to the user because of the user's desire to record the program.

At step 305, the application server 200 may generate an e-coupon based on the notification received and metadata associated with the advertisement. The metadata may include, for example, offer details, such as an explanation of the terms of the offer, the price of the product or service to which the e-coupon is directed, the reduction in the price of that product or service that the e-coupon provides, participating locations, expiration dates and the like. Such details may have previously been provided to the application server 200 by businesses interested in sending out e-coupons to users and may be stored in a database (such as storage 115) within the application server 200 or otherwise accessible by the application server 200.

At step 310, the application server 200 may determine a list of users who may receive the e-coupon. For example, the application server 200 may receive information from the presence server 210 to determine which users are to receive the e-coupon. At step 315, the application server 200 may determine a method of delivery for each recipient. At step 320, the application server 200 may group the different users who may receive the e-coupon by a preferred delivery method. If the preferred delivery method is not available for a particular recipient (e.g., the phone line may be busy or not in operation for a recipient which may prefer to receive a recorded telephone message first before the e-coupon, and then to receive the e-coupon via the telephone's display), the application server 200 may place that user in a different group based on other available delivery methods.

At step 325, the application server 200 may configure e-coupons to be receivable by user communication devices such as computer 250 and/or phone 255. For example, the application server 200 may configure an e-coupon for each delivery method. For users designating an email address, the application server 100 may configure an e-coupon as an email and may deliver it to users who have elected to receive e-coupons as emails. In another example, the application server 200 may configure an e-coupon as a graphic (such as a JPEG or TIFF image file) and may deliver it to users who have elected to receive e-coupons on as a display image on their registered cordless telephones (e.g., phone 255). Other delivery methods may include text messages via short messaging service (SMS) or multimedia message service (MMS), instant messaging, and the like.

At step 330, the application server 200 may deliver the e-coupons to the users via the communication method corresponding to the delivery group the user belongs to.

Depending on the format of the e-coupon and the user's receiving device, the user may print out the e-coupon and redeem it at a store or business, or the user may redeem the e-coupon online via a coupon code or an Internet address. In one aspect, users who receive e-coupons on their cordless phones may be able to accept or cancel the e-coupon by pressing a button or key on the handset of the cordless phone. Alternatively, the coupon may be saved and displayed as a barcode in the cordless handset and may be scanned at the time of redemption. For e-coupons delivered via instant messaging, text messaging, or email, the user may be asked to reply to the e-coupon to indicate whether the user has accepted or canceled the e-coupon. In addition, delivery to mobile devices such as personal digital assistants (PDAs) and other types of cordless telephones such as mobile cellular phones via a cellular telephone and/or data network is herein contemplated.

Referring back to FIG. 3, at step 335, the application server 200 may be configured to update a reporting database. For example, the application server 200 may record the number of users who were sent a particular e-coupon, the number of users who accepted a particular e-coupon and the like. Reporting may further be broking down by geography, type of advertisements, time of day, and the like. In another aspect, the reporting may be done on a per-user basis in order to determine which e-coupons a particular user is more likely to accept or be interested in. Such information may be used by the application server 200 or the presence server 210 in more effectively determining which e-coupons a particular user is likely to appreciate. For example, if a particular user rejects a service related coupon 90% of the time (given a minimum number of deliveries) and accepts a product related coupon 90% of the time, the system may be adjusted to send a user a customization option to stop receiving service related e-coupons with the next service-related coupon.

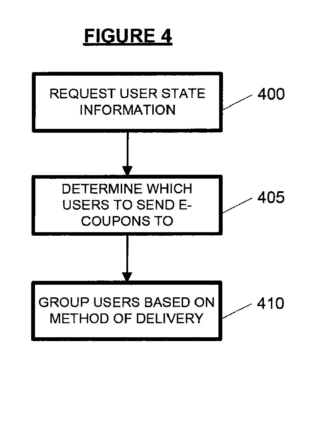

FIG. 4 illustrates an example of a method of determining a list of users who may receive the e-coupon. At step 400, the application server 200 may request information from the presence server 210. For example, the application server 200 may receive a list of users who were watching a particular program or advertisement as determined by the presence server 210. At step 405, the application server 200 may cross-reference the received list with a list of users who are registered to receive e-coupons. In one aspect, the list of users registered to receive e-coupons may be stored in a database (such as storage 115) at the application server 200. For those users who were watching the particular program or advertisement and are registered to receive e-coupons, the application server 200 may group users based on preferred method of delivery at step 410. Information relating to preferred method of delivery may have been obtained from the user at the time of registration.

The presence server 210 may maintain state information for each monitored user device such as set-top box 235 and/or television 245. The state of each user device may be a description of the usage status of the device. For example, the current state of the set-top box 235 may be "active-channel 1" when a user is currently tuned to channel 1 on the set-top box 235. If the user changes the channel to channel 2, the current state of the set-top box 235 may be updated to be "active-channel 2". In another aspect, if the user is using the cordless handset 255, the current state of the handset 255 may be "in-use". The presence server 210 may communicate in real time with each user's modem (e.g., modem 225) and/or set-top box (e.g. set-top box 235) to monitor each device connected to that modem and/or set-top box. In one aspect, the presence server 210 may use an Extensible Messaging and Presence Protocol (XMPP) to communicate and maintain state information for each monitored device.

The presence server 210 may generate the list of users who were watching a particular program for the application server 200 by filtering the current state of set top boxes connected to video displays and by the program or advertisement that the set-top box is currently displaying or the channel that the set-top box is tuned to. The presence server 210 may also search state information for each computer connected to the modem (e.g., computer 250) if the computer is displaying or downloading the program or advertisement via the internet.

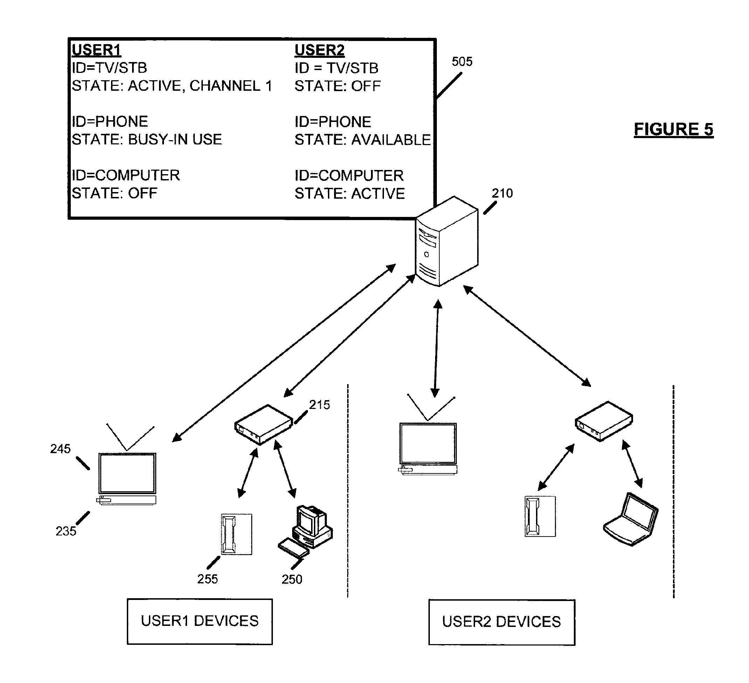

In one example, when the presence server 210 receives a request from an application server 200 for a list of users who are watching a particular program or advertisement, the presence server 210 may search state information at the time of the request. FIG. 5 illustrates an example of how the presence server 210 may maintain a database (e.g., in storage 115) which indicates the current state information for each monitored device. The database may also include corresponding user and device information.

As shown in FIG. 5, a presence server 210 may monitor and store state information for each of a plurality of user devices. User devices may include television 245 and set-top box 235, a cordless telephone 255 and a network computer 250. In one aspect, the state information for telephone 255 and computer 250 may be obtained directly from the devices or via a modem or other intermediary (e.g., cable modem 215). For example, such presence information may be a stored table or database 505. Other information may also be obtained from the user devices and stored in the database. The information stored in the database may be delivered to an application server (e.g., application server 200 as shown in FIG. 2) in the same or different format. In one aspect, the presence server 210 may process the information stored in the database and provide the processed information to the application server.

While user devices are only shown for two users in FIG. 5, the presence server 210 may monitor information from any number of users and/or subscribers.

In one aspect, different users of a particular subscriber account may be sent different e-coupons. For example, with respect to a family subscriber account, the presence server 210 may determine that one member of a family (e.g., the mother) may be watching the television and may send an e-coupon to the mother's registered e-mail address. Conversely, the presence server 210 may determine that another member of the family (e.g., the father) is watching a different program contemporaneously and a different e-coupon may be generated and sent to the other member's personal phone line or handset.

In one aspect, the application server 200 may trigger delivery of an e-coupon without prompting by an ad server 205. For example, a schedule may be used to determine when certain e-coupons may be delivered to users, and at the appropriate time the presence server 210 may be requested for user state information to determine which users are to be sent the e-coupons.

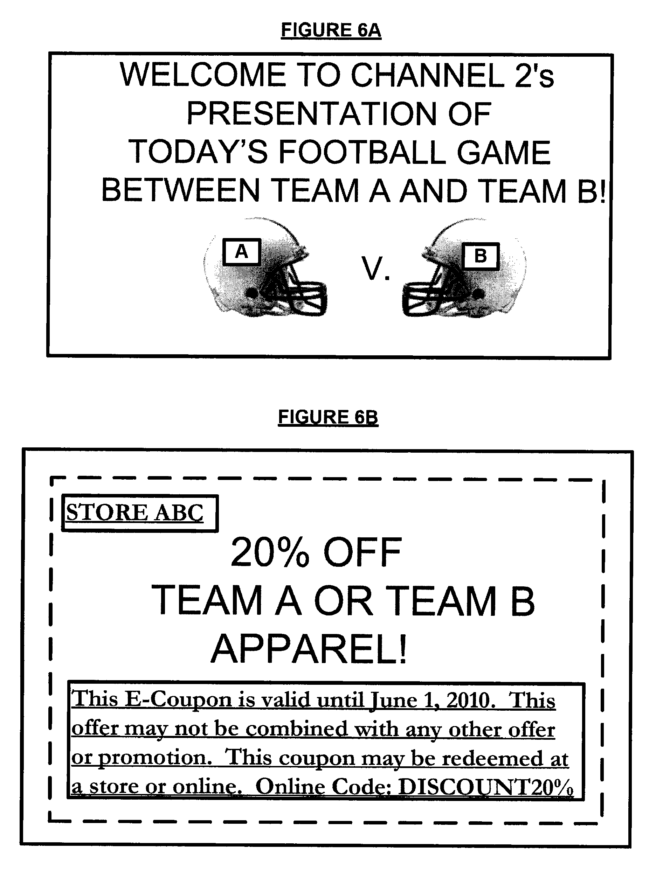

In another aspect, the e-coupon generated and delivered may correspond to the program viewed by a particular user eligible to receive the e-coupon. For example, FIG. 6A illustrates a snapshot of an e-coupon that may be displayed on a television such as television 245. Here, channel 2 is about to begin broadcasting of a football game between Team A and Team B. FIG. 6B illustrates an example of an e-coupon that may be delivered to registered users watching the football game between Team A and Team B. For example, the e-coupon may be a 20% coupon applicable to all purchases of Team A or Team B apparel made at store ABC either online or locally.

While the content of the e-coupon generated and sent to a user may depend upon the content of the program being viewed by the user, the content of the e-coupon might not necessarily correspond directly with the program. For example, registered users who are watching the football game between Team A and Team B may be sent an e-coupon for a discount on food and beverages from a local pizzeria valid for the duration of the game. Other analysis may be performed to determine the particular e-coupon which may be of interest to users who are watching a particular program or advertisement.

Other criteria may be used to determine appropriate recipients for delivery of the e-coupon. For example, in addition to a user that is tuned to a particular channel or program, e-coupons may be delivered to registered users who may be known to already have a particular product. For example, an e-coupon may be generated and delivered to users who are watching cable television and who have cable internet service, regardless of the channel or program being watched. It is herein contemplated that studying the user's viewing experience may also be performed and the results of which may be taken into account when determining which users are to receive a particular e-coupon. In one aspect, when two programs are being watched simultaneously (e.g., via Picture-in-Picture), where a user might otherwise receive two e-coupons (one e-coupon for each of the programs), the presence server 210 may determine, based on intelligence, that the user may be more interested in one of those e-coupons over the other of those e-coupons. As such, only that e-coupon determined to be more interesting to the user may be delivered.

The businesses who desire to have e-coupons delivered to users may store e-coupon information (metadata) in a database accessible to the application server 200. In one aspect, businesses may update e-coupon information within the database to remove, extend, or change the terms of the offer. E-coupons are not limited to discounts, but may additionally or alternatively include information on an advertised product such as how much a product costs, which local stores carry the product, which authorized websites sell the product, advantages over competitor's products and the like.

Aspects described herein are contemplated to be applicable for use by any entity desiring to distribute e-coupons to users. While illustrative embodiments described herein embody particular aspects, it will be understood by those skilled in the art that the invention is not limited to these embodiments. Modifications may be made by those skilled in the art, particularly in light of the foregoing teachings. For example, each of the elements of the aforementioned embodiments may be utilized alone or in combination or sub-combinations with the elements of the other embodiments. It will also be appreciated and understood that modification may be made without departing from the true spirit and scope of the present invention. The description is thus to be regarded as illustrative, rather than restrictive, of the present invention.

## Claims

1. A method comprising:
generating, by a computing device in response to a trigger, an e-coupon based on a user's consumption of a video program, advertisement, or channel;
determining a plurality of recipients of the e-coupon;
for each of the recipients, configuring the e-coupon for a different delivery method; and
for each of the recipients, sending the configured e-coupons to the recipient using the delivery method associated with the recipient.

2. The method of claim 1, wherein the consumption includes viewing a broadcast video program or recording a broadcast video program, and the method further comprises the computing device monitoring and tracking consumption by a plurality of users.

3. The method of claim 1 or claim 2, further comprising:
determining the delivery method for each of the recipients, wherein each of the delivery methods is one of: an email, a text message, a graphic sent to a portable telephone and a message sent to a mobile device, and the determination is made based on individual recipient preference, historical acceptance of coupons, and availability.

4. The method of any preceding claim, further comprising:
storing a coupon as an electronic barcode on a recipient's portable telephone.

5. The method of any preceding claim, further comprising:
updating a database to update one of: which users were identified as recipients of a particular e-coupon, how many of the recipients accepted the e-coupon and a percentage of e-coupons received by a particular recipient.

6. The method of any preceding claim, wherein determining the recipients of the e-coupon further comprises:
querying a presence server for an indication of users watching a particular video program or channel; and
receiving the indication of users watching the particular video program or channel.

7. The method of any preceding claim, wherein the delivery method includes a time schedule for the delivery of coupons.

8. The method of any preceding claim, further comprising determining that a user is simultaneously consuming two different video programs each having e-coupons associated therewith, and using that user's preference information to determine which of the two associated e-coupons should be delivered.

9. An apparatus comprising:
a processor; and
one or more computer-readable media storing computer-readable instructions that, when executed by the processor, cause the apparatus to perform:
responsive to detecting a trigger event, generating by a computing device an e-coupon based on a particular video program user viewing status;
determining a plurality of recipients of the e-coupon;
for each of the recipients, configuring the e-coupon for a different delivery method; and
for each of the recipients, sending the configured e-coupons to the recipient using the delivery method associated with the recipient.

10. The apparatus of claim 9, wherein the memory further stores instructions that when executed perform:
determining the delivery method for each of the recipients, wherein each of the delivery methods is one of: an email, a text message, a graphic sent to a cordless telephone and a message sent to a mobile device.

11. The apparatus of claim 9 or claim 10, wherein the apparatus is configured to:
maintain a database of a current device state for each of a plurality of user devices including the at least one set-top box or television; and
update the current device state of the set-top box or television to be one of: active and inactive, and to identify a program or channel that the user is consuming.

12. One or more computer readable media store instructions that when executed by a processor, performs the method of:
responsive to detecting a trigger event, generating by a computing device an e-coupon based on a particular video program user viewing status;
determining a plurality of recipients of the e-coupon;
for each of the recipients, configuring the e-coupon for a different delivery method; and
for each of the recipients, sending the configured e-coupons to the recipient using the delivery method associated with the recipient.

13. The computer readable media of claim 12, wherein the recipients include users viewing the particular video program.

14. The computer readable media of claim 12 or claim 13, wherein the media further stores instructions that when executed perform:
the delivery method for each of the recipients, wherein each of the delivery methods is one of: an email, a text message, a graphic sent to a cordless telephone and a message sent to a mobile device.

15. The computer readable media of claim 14, wherein the delivery method is a graphic sent to a cordless telephone, wherein the cordless telephone communicates with both a modem and a handset to receive the graphic.
